# EUROPEAN PATENT SPECIFICATION

(11) **EP 4 440 033 B1**
(45) Date of publication and mention of the grant of the patent: **12.03.2025**
(21) Application number: 23165773.5
(22) Date of filing: 31.03.2023
(51) Int. Cl.: H04L 9/32

(54) **AUTHENTICATING DATA BASED ON CERTIFICATES**
AUTHENTIFIZIERUNG VON DATEN AUF BASIS VON ZERTIFIKATEN
AUTHENTIFICATION DE DONNÉES BASÉE SUR DES CERTIFICATS

(43) Date of publication of application: 02.10.2024
(73) Proprietor: SICK AG, 79183 Waldkirch (DE)
(72) Inventor: Metzger, Lukas, 79106 Freiburg (DE); Fandrich, Sebastian, 78120 Furtwangen (DE); Fritsch, Kai-Jannick, 79183 Waldkirch (DE)

(56) References cited:
- WO-A1-2018/153018
- WO-A1-2023/023959
- US-A1- 2016 191 253
- US-A1- 2017 228 412
- US-B1- 9 479 340

## Description

The invention relates to a method for modifying an electronic device by downloading authenticated data from a data host, a data host and certification network, and an electronic device according to the preamble of claim 1, 9, and 10, respectively.

Authenticity of data must be provided in various use cases in a modern connected world. One particular scenario of interest is a manufacturer or other trusted party providing data for products, such as firmware updates or function upgrades. Making sure that the data actually originates from the intended party is a means of prevention against possible cyber attacks.

A conventional solution is based on digital signatures using asymmetric cryptographic systems. The authorized party generates a private and public key pair and signs the data with the private key. The public key is included in the product and used to verify the signature and thus check the data for authenticity. Usually, the signature also ensures integrity of the data, for example by including hash values over the data or a similar mechanism.

The public key verification makes sure that the data was signed by a party having access to the corresponding private key. There are two obvious potential weak points in this cryptographic system, namely, the private key and the public key. Both aspects will be discussed in the following, starting with the public key. It must be distributed to any entity that is to be enabled to verify the signature. That entity in turn has to be sure that the public key is authentic from the intended data source. Just sending the public key along with the data is not an option, because an active attacker could forge the message and create a new valid signature with his own private key and replace the attached public key with his own. The receiver would not notice without knowledge of the legitimate public key.

Hence, digital signatures in effect reduce the problem of transmitting an arbitrary amount of data in a protected manner to the problem of securely transmitting the public key. A simple solution would be transfer of the public key via a secret channel outside the system, for example in a manual installation or provision of the public key to a product at the factory. This is impractical especially in case of lots of products and lots of keys, and it somehow takes the elegance from a secure digital solution as compared to traditional secrecy means.

Public Key Infrastructure (PKI) is a known concept to overcome this issue. The idea is to add a trusted third party where the task of verifying the public key of named entities is delegated. The trusted third party is called certificate authority (CA). Every entity participating in the signing system has to prove its identity to the CA and provides its public key to the CA. Upon successful identification, the CA creates a data structure including the name of the entity and the entity's public key. The data structure might include additional metadata, for example a validity period or constraints on the included public key's use. The data structure is signed with the private key of a key pair of the CA. The signed data structure is called a certificate, because the CA certifies that it has checked the entity's identity and vouches for the correctness of the included public key of that entity. It should be noted that, in the above explanation, two key pairs are involved: The entity's key pair, whose public key is to be certified, and the CA's key pair used for signing certificates.

Getting back to signing data for authentication, it is now possible to send the certificate along with the data and the signature. The receiver can use the CA's public key to verify the validity of the information in the certificate. The public key of the data source in the certificate hence inherits the trust from the CA and can subsequently be used to check the signature and thus authenticity of the data. The Public Key Infrastructure reduces the problem of obtaining and checking many public keys of a variety of entities to one public key of the CA. The CA public key still needs to be transferred by a secure channel out of the system, but the problem now is on a manageable level of complexity.

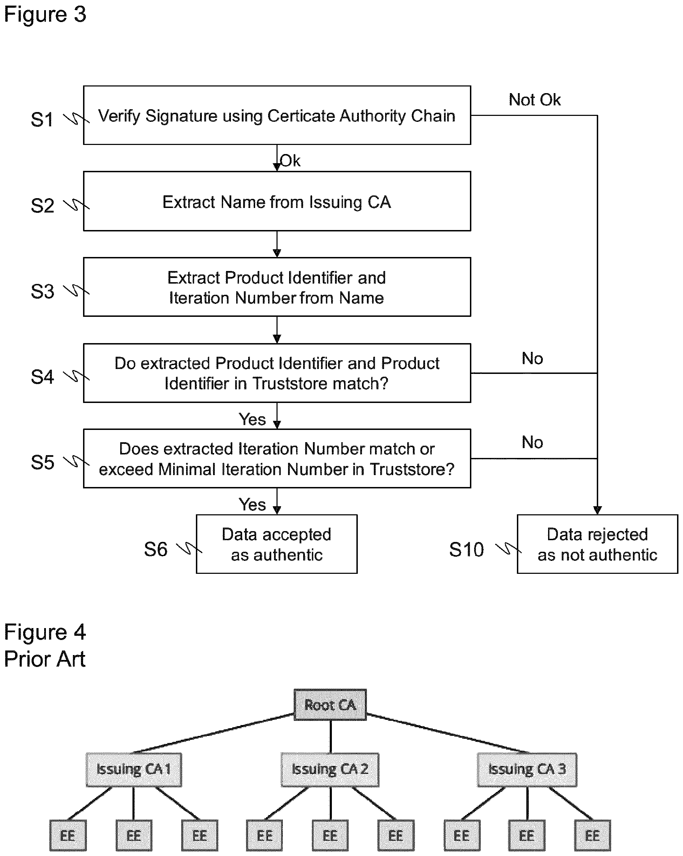

Figure 4 shows an example tree of certificate authorities where trust is delegated in chains of certificate authorities. There is a Root CA at the top level. It delegates trust to subordinate CAs on a lower level, called Sub CA or Issuing CA. The Root CA vouches for the Issuing CAs with a certificate signed with the Root CA private key. The Issuing CA in turn vouches for a lower level entity using its CA private key. The result is a tree, with the Root CA at its root. Leaf certificates which are not CAs are called End Entity (EE) certificates. The tree can become a lot more complex and have a hierarchical structure with more levels than shown in Figure 4. The tree can model a real hierarchical structure, such as the organization of a company, or it can be employed for purely technical or security purposes.

A widespread standard implementing certificates in a PKI environment is X.509, currently specified in RFC 5280: Sharon Boeyen et al. Internet X.509 Public Key Infrastructure Certificate and Certificate Revocation List (CRL) Profile. RFC 5280. May 2008. DOI: 10.17487/RFC5280. URL: https://www.rfc-editor.org/info/rfc5280.

There are also standards for applying PKI to data signing. They define data structures comprising at least the signature, preferably data on the used signature algorithm, and the certificate for the public key used for signing along with all certificates in the PKI tree up to the root certificate. The data structure may already include the signed data, which is called an attached signature. In the alternative called detached signature, the data structure of the signature does not itself provide the signed data which needs to be transferred in a separate step. A standard implementing attached and detached signatures is the Cryptographic Message Syntax (CMS) defined in RFC 5652: Russ Housley. Cryptographic Message Syntax (CMS). RFC 5652. Sept. 2009. DOI: 10.17487/RFC5652. URL: https://www.rfc-editor.org/info/rfc5652.

With a mechanism for securing the public key in place, the discussion now focusses on the private key. It is a core requirement of asymmetric cryptographic systems that the private key must be protected from unauthorized access, since anyone with access to that key is able to create signatures in the name of the legitimate key owner. It then can also be used by an attacker to sign malicious data. It is not only the private key used in the signature, but also each private key in the certification chain that could be compromised. This is a known problem of any PKI setting, rendering a certificate no longer trustworthy.

In that case, it is necessary to declare the certificate invalid. This process is called certificate revocation. There are two established technologies. However, both of them suffer from severe drawbacks, in particular in a context of small embedded devices that are not connected to the internet.

One known technology is called Certificate Revocation Lists (CRLs), where each CA publishes a list of all revoked certificates, the list being signed by the CA's private key.

During verification of a certificate, the verifying client has to download the CRL and to check whether or not the certificate is listed. This approach does not scale very well. In case of larger numbers of revoked certificates, the CRL becomes unmanageable, in particular for embedded devices with limited resources. Moreover, the device must have access to the internet to download the CRL in the first place.

Online Certificate Status Protocol (OCSP) is another, more scalable technology. The client contacts the CA in the certificate validation process and asks for the status of the certificate. The CA generates a response with the current status of the certificate, signed with a validity period of a few hours. The advantage is that only the state of one certificate needs to be communicated, as opposed to the states of all revoked certificates when using a CRL. A disadvantage with regard to data protection is that the CA learns about the certificate the requesting client is interested in, and that together with the IP address of the requesting device. Moreover, as when downloading a CRL, an OCSP certificate check depends on an internet connection. In many relevant scenarios, like industrial applications, the clients or their local networks are disconnected from the internet for reasons of security. Then, both conventional certificate revocation concepts are not applicable.

EP 3 211 826 B1 discloses a method for handling implicit certificates using a distributed public key infrastructure. By storing certificates in different nodes of the network as a function of a distributed hash table, rather than a single certificate authority, a chain of certification operations is established that reinforces authentication of network nodes. However, the document does not propose any improvement for revocation of certificates.

US 7 315 941 B2 discusses digital certificate revocation, with CRL and OCSP mentioned in the introduction. A mechanism is disclosed that reduces the costs of revocation and re-validation in the CA chain. However, this does not replace the act of checking whether an individual certificate is revoked.

US 7 793 097 B2, US 9 794 249 B1, US20020108042A1, and WO 2016/109507 A1 each are concerned with certification based on more than one cryptosystem, algorithm, or certificate.

US 2016/0191253 A1 is concerned with industrial network certificate recovery. A programmable device stores a plurality of root certificates, with an active certificate and one or more secondary certificates. When receiving an indicator of a secondary root certificate, this certificate is activated for future use. As an alternative, the device itself detects use of a secondary root certificate as a trigger for the activation.

US 9 479 340 B1 discloses a computing device storing a root key in a persistent memory, and furthermore having a second memory for storing one or more current key version indicator, each associated with a corresponding secondary public key The device will only trust certificates having a version indicator being the same or higher than a stored current version indicator.

WO 1028/153018 A1 is about a key update method where an authorization server periodically adds 1 to a version number associated with a public/private key pair.

WO 2023/023959 A1 describes a digital certificate revocation based on a certificate revocation list.

It is therefore an object of the invention to improve recovery of a system using certificates, in particular certificates for digitally signing data, to a secure state once a certificate can no longer be trusted.

This object is satisfied by a method for modifying an electronic device using authenticated data from a data host, a data host and certification network, an electronic device, and a computer-readable data carrier according to claim 1, 9, 10, and 12, respectively. The authenticated data may include a firmware update, a software module, or a first or updated configuration, but are not limited to these examples. The data may or may not be encrypted. Once the data is available in the electronic device, and possible code transmitted with the data is executed, the device is modified accordingly.

The data is digitally signed by a signer or signing service using a signature private key of an asymmetric cryptographic system based on a signature key pair. The signature private key is only known to the signer. The signature public key is not particularly protected and known to the electronic device, preferably included in the retrieved data. The signed data is provided to the data host. Both signer and data host may be regarded as a software module or service implemented on any kind of computing hardware. Throughout this specification, preferred or preferably refers to an advantageous, but optional feature.

The signed data is retrieved from the data host by the electronic device. Retrieval of the data may be initiated by either the data host or the electronic device in embodiments of the invention. There are various possible communication paths for both the data transfer between signer and data host and between electronic device and data host, and data transfer can be both direct or indirect. For example, the data host may have an at least temporary network or internet connection to the signer. Likewise, the electronic device may have an at least temporary network or internet connection to the data host. The data host can also directly be connected to an interface of the electronic device, like a computer or notebook being connected to the electronic device, or a computer-readable data carrier can be used to transfer the data from the data host to the electronic device, possibly with intermediate steps like downloading from the data host to the data carrier. That way, an internet or network connection of the electronic device can be avoided in situations like an industrial environment where that connection is not desired or not technically possible.

The authenticity of the signature public key is confirmed in a certificate of a certificate authority. The certificate preferably includes the signer's name and the signature public key. The certificate authority, which is a software module or service implemented on any kind of computing hardware, has signed the certificate with its certification private key, thus confirming that the signer uses this signature public key. There are thus already two key pairs involved: the signature key pair that the signer uses for signing the authenticated data, and the certification key pair that the certificate authority uses for issuing certificates. There may be additional key pairs for higher-level certificates in a chain of certification authorities up to a root authority in the preferred case that the signer and certificate authority are part of a PKI structure.

It is also checked whether the certificate is valid. The certificate might have lost validity, or in the conventional framework have been revoked. Any reason is conceivable, but usually a breach of security has taken place or might have happened. Thus, the certification private key might no longer be secret. Conventional mechanisms to deal with validity are revocation lists or online status requests as discussed in the introduction, which are replaced or supplemented by the inventive mechanism explained below.

The electronic device may now use the signature public key to confirm the digital signature and thus authenticity of the data. The steps will not necessarily be executed in that order. For example, the authenticity of the data could tentatively be confirmed by validating the signature using the signature public key, with only afterwards checking whether the signature public key is actually validated based on the certificate, and checking validity of the certificate before or thereafter. The certification mechanism may include variants of these steps or other steps as explained in the introduction. In particular, the actual retrieval of the data may be based on either attached or detached signatures.

The invention starts from the basic idea of using an iteration number in the validity check of the certificate. The iteration number or version number distinguishes certificates, with certificates of certain iteration numbers being valid and certificates of certain other iteration numbers not being valid, in particular deemed revoked. The iteration number is included in the certificate, preferably as part of the name of the entity that the certificate authenticates. The electronic device checks, based on the iteration number, whether the certificate is still valid. If there is a chain of certificates, the iteration number preferably is part of every certificate in the chain, with the possible exception of a root certificate.

The method is a computer-implemented method, for example implemented in a computer or computer network of any known kind and any electronic device capable of data transfer, in particular sensors or embedded devices used in an industrial environment.

The invention has the advantage that certificates used for digital signatures, or in effect private keys, can easily be revoked. Thus, the scope of a breach in security can be isolated and a high security level be assured. Fast recovery to a secure state satisfies a market need and, in some instances, even legal requirements for products that are modified by data download of any kind. The invention can be applied in scenarios where the recipient of authenticated data does not necessarily have access to the internet. The resource requirements are small, as is the overhead and the implementation complexity. In particular, the required memory does not increase with each revocation, in contrast to revocation lists. There is in fact no practical limit to the number of possible revocations, because nothing but a fresh iteration number is required. The inventive mechanism can also be seen as a preparation for future attacks against asymmetric cryptographic systems.

At least a second digital signature and at least a second certificate preferably are used to confirm authenticity of the data, with the second certificate also checked for validity based on the iteration number or another iteration number. In other words, this is a redundant or diverse approach based on multiple signatures, certificates, algorithms, and PKI structures, respectively. Should one of the mechanisms be breached, the other(s) still hold, with the one breach easily recovered by the inventive certificate validation mechanism based on iteration numbers. The mechanisms preferably use different iteration numbers for the case that only one of the algorithms has been breached and another still is considered secure.

The electronic device stores a minimal iteration number that the certificate's iteration number needs to match or exceed in order to be accepted as being valid. The minimal iteration number preferably is part of the electronic device's truststore, with truststore being the established name for a list of certificates and related information for example in the X.509 framework. Of course, the X.509 truststore does not contain any iteration number, because X.509 does not contain this inventive mechanism. With the minimal iteration number, the electronic device has a locally accessible information, independent from online access to the internet, for checking whether a certificate is still valid. Certificates of a lower iteration number thus can locally be rejected, a digital signature inheriting trust from such iteration number no longer be trusted. It is worth mentioning that terms like "increasing" or "exceeding" the iteration number relate to the most natural and thus preferred way of putting iteration numbers into an order, with only iteration numbers beyond the minimal iteration number being trusted. However, this preferably is to encompass any other order established by some function mapping iteration numbers into any equivalent order, like decreasing iteration numbers, increasing them in multiples of five, or using rational numbers instead of integers, with the "minimal" iteration number marking the boundary between certificates that are still valid and those that are not.

Certificates of the certificate authority preferably are validated by a chain of higher-level certificate authorities with a root certificate authority at the origin of the chain. This adds a chain of certificates, in particular a more complex PKI structure as described in the introduction. Certificates in a chain preferably all include the iteration number, and preferably also a product identifier that will be introduced below. The certificates in an unbroken chain iteratively inherit trust from the root certificate authority, and each certificate in the chain can be validated using the respective public key and accessing the responsible certificate authority. The root certificate authority is implicitly trusted, being associated with the manufacturer or vendor, a government, or some other trustworthy private authority. Certificate chains may be long, in a complex PKI, but also quite short, like a root certificate authority and a signer.

The electronic device preferably stores a root certificate of the root certificate authority. The root certificate in particular is part of the electronic device's truststore. It is preferably stored in an initial access by some secure means outside the system, like from the factory or in a manual installation process. A root certificate cannot be recovered, short of manual measures from the outside, because with no trust in the root, there is no trust left at all. However, it is possible to have a redundant or diverse system as mentioned above, with more than one PKI structure and thus root certificate authority. In that case, the remaining other PKI structure(s) may be enough to continue or may even assist in a root certificate authority recovery.

The electronic device stores a product identifier corresponding to a designated certificate authority among a plurality of certificate authorities that include a certificate authority responsible for each possible product identifier. The product identifier defines the type of the electronic device, like a device type or a product family. The product identifier preferably is part of the electronic device's truststore. The plurality of certificate authorities is to be understood on a same level. They kind of divide the electronic devices to be supported among one another, with the product identifier associating product and certificate authority. The relation of product identifier and certificate authority preferably is one-to one. However, as an alternative, one certificate authority may be responsible for several product identifiers, or there could be redundant certificate authorities responsible for a same product identifier. In any case, with any specific product identifier, there is only a selection of certificate authorities that are responsible. Thus, any breach of security is limited to only that subset of the electronic devices that use the product identifier affected by the breach. In addition to that horizontal view, each of the certificate authorities responsible for one or more product identifiers could be supplemented in the vertical direction by higher-level certificate authorities as already described, forming certification chains associated with the respective product identifier or identifiers.

The electronic device checks whether the certificate matches the product identifier. Thus, the electronic device will only accept certificates and ultimately data that relates to its product identifier. This is another layer of security and a means of limiting the impact of a security breach.

The root certificate authority preferably authenticates a plurality of certificate authorities that include a certificate authority responsible for each possible product identifier. In this embodiment, the certificate authorities dividing responsibility for product identifiers among one another are tied to a same root certificate authority. This facilitates management of the plurality of certificate authorities and the product identifiers.

In order to invalidate or revoke a certificate, a new certificate authority preferably is set up, replacing the certificate authority, and issuing certificates with iteration number increased. The new certificate authority can be said to have a higher iteration number than the certificate authority it replaces. As already described, the electronic device only accepts certificates after a check based on the iteration number. This embodiment relates to the complementary mechanism that provides certificates of an iteration number that still is accepted as valid. The certificate authority responsible for certificates of the former iteration number is retired. Its place is taken by a new certificate authority, with the difference preferably being limited to the iteration number being increased. The certificate authority basically has a new name only, the difference is the new iteration number, and preferably also a fresh key pair replacing the keys that are assumed to be compromised and reason for the revocation. Certificates issued by the new certificate authority are still trusted, there is an upwards compatibility: the new iteration number also, a fortiori, fulfills the requirements of the former iteration number. There can be no downwards compatibility, that would mean acceptance of a revoked certificate, and distrusting such certificates is the very reason to implement an iteration number mechanism. In other words, newer certificates are trusted, while older are not, the discrimination between newer and older being based on the iteration number. The setup of a new certificate authority with increased iteration number can be extended up the certification chain, up to but excluding the root.

The new certificate authority preferably is authenticated by the root certificate authority. The root certificate authority thus confirms authenticity of the new certificate authority replacing the certificate authority with the old iteration number. Any newly set up certification authorities thus are trusted by the electronic device, because they originate from the same known root and thus highest trust anchor as before.

The authentication by the root certificate authority preferably takes place offline. Preferably, the root certificate authority is always offline. The root must not be compromised, and keeping it offline prevents a major part of potential attacks. This also restricts the possibility to setup certificate authorities to persons having offline access to the root certificate authority. However, this is acceptable or even desirable. End users do have a legitimate interest to access a certificate authority for validating certificates, but there is usually no reason to manipulate the certificate authority structure. On the contrary, the certification keys of the certification authorities preferably are also offline to limit opportunities of misuse. Only the signature keys are required in daily business, stored on the signer that can be permanently online, preferably in an access protected system that may be backed by a hardware security module.

Following revocation of a certificate and increase of the iteration number, the electronic device preferably is updated via authenticated data retrieved from the data host, the update including storage of a new minimal iteration number. In its old configuration, the electronic device would still accept certificates including the old iteration number. Once it is updated with a new minimal iteration number, these certificates are no longer trusted. The update may include other data, with only update of the minimal iteration number being mentioned because this is the part of an update relevant for the inventive certificate validation or revocation mechanisms. The data including the update is trusted as authentic: It is signed and certified with the new iteration number that is accepted vis-à-vis the old minimal iteration number still used by the electronic device prior to the update, in particular because the new iteration number exceeds the old minimal iteration number. At the same time, it originates from the same root certificate authority that the electronic device always trusts. The update of the electronic device can be triggered remotely if the electronic device is online. However, the invention also aims at devices that have no internet access. In that case, the electronic device's owner may be informed to initiate the update according to an agreed vulnerability handling process.

In a data host and certification network according to the invention for providing authenticated data to an electronic device, the certification network comprises a certificate authority configured to issue a certificate confirming authenticity of a signature public key of a signature key pair and a signing service for digitally signing the data with a digital signature using a signature private key of the signature key pair. The certification network in particular comprises at least one PKI and may confirm authenticity of the certificate in a certification chain. The data host provides direct or indirect access for the electronic device to retrieve the signed data using one of the communication paths discussed above. The certificate includes an iteration number and a product identifier usable in a check whether the certificate is valid, thus making use of the validation or revocation mechanism based on iteration numbers and product identifiers as explained in the context of the inventive method, with any embodiments and variants of the method possibly being implemented.

An electronic device according to the invention, in particular a sensor, comprises an interface for at least indirectly connecting the electronic device to a data host, in particular to a data host and a certification network as described in the previous paragraph, a memory for storing data, and a control unit configured to
- retrieve authenticated data via the interface and to store the data in the memory, the data digitally being signed by a signing service with a digital signature using a signature private key of a signature key pair;
- verify a signature public key of the signature key pair using a certificate of a certificate authority;
- check whether the certificate is valid;
- confirm the digital signature and thus authenticity of the data using the signature public key; and
- if authenticity of the data is confirmed, modify the future control of the electronic device based on the data,
wherein the certificate includes an iteration number and a product identifier, and the control unit is further configured to check whether the certificate is still valid based on the iteration number and the product identifier as explained in the context of the inventive method, with any embodiments and variants of the method possibly being implemented.

The interface may be cable-based or wireless and be used for any of the communication paths discussed above. The electronic device preferably is online at limited times only, if at all, such as during a user-initiated retrieval of data. The data stored in the memory may be any data, software or program code. The control unit is some kind of computing hardware, such as comprising at least one microprocessor or similar digital component, that controls the device, in particular by executing code stored in the memory.

A computer-readable data carrier according to the invention stores authenticated data, the data being digitally signed using a signature private key of a signature key pair, and a signature public key of the signature key pair being confirmed by a certificate issued by a certificate authority, wherein the certificate includes an iteration number and a product identifier for checking whether the certificate is valid based on the certificate number. The stored data thus is signed and certified using the inventive mechanism based on an iteration number and the product identifier. The data carrier can be used to establish at least part of the communication pathway between electronic device and data host, in particular in cases where the electronic device is permanently disconnected from the internet, or does not have an internet interface in the first place.

In a preferred embodiment, at least one electronic device according to the invention forms a system with some kind of server infrastructure including at least one data host and certification network according to the invention. Electronic device, data host, and/or certification network can be modified according to and enabling any embodiment of the method according to the invention.

The invention will be explained in the following also with respect to further advantages and features with reference to exemplary embodiments and the enclosed drawing. The Figures of the drawing show in:
- Fig. 1: an overview of an electronic device retrieving data from a data host, the overview including a signer and certificate chain for authenticating the data;
- Fig. 2: an exemplary certification structure (PKI Tree, Public Key Infrastructure);
- Fig. 3: an exemplary flow diagram for validating data as authentic; and
- Fig. 4: an exemplary certificate authority tree or PKI according to the prior art.

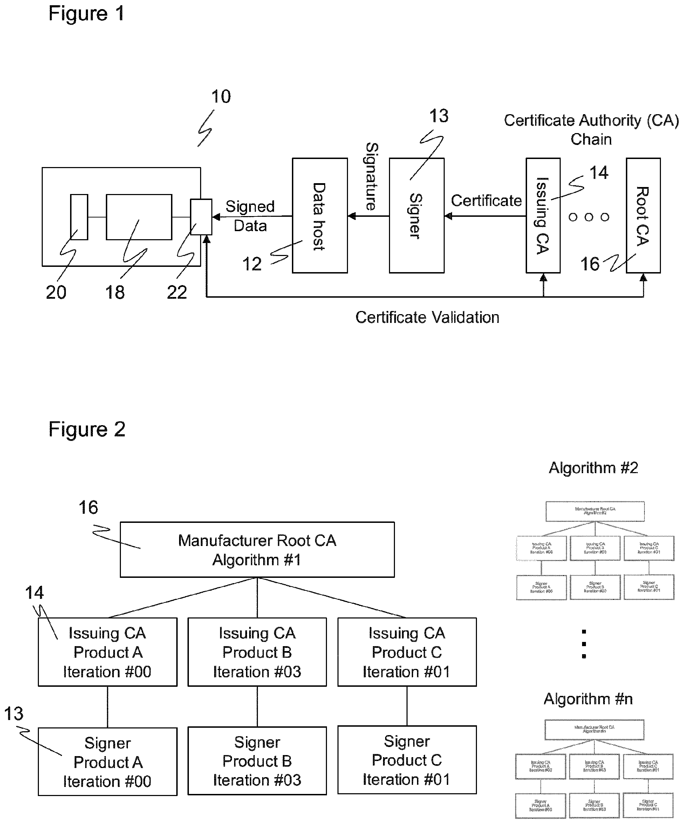

Figure 1 shows an overview of an electronic device 10 connected to a data host 12 and a certification network including a signing service or signer 13, at least one issuing certificate authority 14, and a root certificate authority 16. The electronic device 10 comprises a control unit 18, a memory 20, and an interface 22, with the control unit 18 being connected to both memory 20 and interface 22. The control unit 18 comprises at least one digital component, like a microprocessor or similar device, capable of running code that controls the electronic device's 10 functions. The interface 22 may be of the cabled or wireless variety, according to any known standard, and establishes an at least temporary, usually indirect connection to the data host 12, for example via a network or a cloud.

The electronic device 10 can be a product of any kind that is able to retrieve data. In particular, the electronic device 10 can for example be a sensor or an embedded device used in an industrial environment where connection to the internet might not exist or be limited for various reasons including lack of infrastructure and security. The electronic device 10 retrieves data from the data host 12 that has been digitally signed by signer 13. The signed data is stored, possibly after being processed by the control unit 18, in the memory 20. The data might be used for a firmware or other software update process. The signature authenticating the data also makes sure that the data has not been tampered with, and the data may be additionally encrypted.

The connections between electronic device 10, data host 12, signer 13, issuing certificate authority 14, and root certificate authority 16 may be some kind of permanent or temporary internet link. The data retrieval from the data host 12 in that case could be a download. However, other embodiments are not based on internet links, but other kinds of network, direct wired or wireless connections, or connections mediated by portable computing devices or data carriers. A data transfer may be initiated by the electronic device or pushed by the data host 12 or an intermediary device. Also note that the connections could be established at different points in time. For example, data may be transferred to or created by the data host, signed, and retrieved at different points in time each. The data transfer could be step-wise at different points in time, for example transferring the signed data from a server acting as data host 12 to a notebook or similar device or a data carrier and later on connecting that notebook or data carrier to the electronic device 10.

Authenticity of the signature, in particular the public key used for validating the digital signature of the signed data, is confirmed by a certificate from the issuing certificate authority 14. The issuing certificate authority 14 in turn is authenticated by certificates from higher-order certificate authorities in a certification chain up to root certificate authority 16. The electronic device 10 can check each instance of the certification chain thanks to knowledge of the root certificate or root public key. In a preferred embodiment, at least the root certificate authority and possibly at least some of the issuing certificate authorities are protected by being permanently offline. The data host 12 can be permanently online so that data can be retrieved anytime.

Figure 2 shows an exemplary certification structure (PKI Tree, Public Key Infrastructure) to further explain the certification or authentication and also a revocation mechanism in an embodiment of the invention. Generally, the certification is based on the principles described in the introduction, in particular with reference to Figure 4, which may apply unless modified and are not repeated. One example implementation is based on X.509, but the invention is not restricted to that particular standard. Figure 2 shows only one level of issuing certificate authorities 14 representative also for a more complex architecture with more levels and thus longer certification chains. Conversely, in a simplified embodiment, the root certificate authority 16 may directly issue signing certificates. Then, there is no middle horizontal level of certificate authorities 14. The following description can be understood to accommodate these cases by analogy.

There is a selection of signers 13 positioned at the leaves of the certification structure and called "signer", because signing the data is their function with respect to the certification structure. To that end, signers 13 own a signing certificate, whereas certificate authorities 14 including root certificate authority 16 own an issuing certificate for extending trust to a subordinate entity via issuing a certificate.

The root certificate authority 16 is under the responsibility of a trusted entity, such as the manufacturer or vendor of the electronic device 10. It is additionally marked with "algorithm #1". The algorithm refers to some specific kind of asymmetric cryptographic system. In a preferred embodiment, the certification structure is doubled or multiplied, as indicated by the small gray shaded trees on the right-hand side of Figure 2. In that case, data to be retrieved, as well as certificates, are authenticated by two or multiple signatures and certificates, with a parallel authentication using different algorithms #2... #n, where preferably all the signatures are verified in order to further increase security. While multiple signatures and certificates add another level of security, the further explanations will refer to the case of only on certificate structure that can be transferred by analogy.

The certification authorities 14 and signers 13 comprise an additional information called iteration number or version number. Should a (private) key get compromised, every key associated with an iteration number older than a specific iteration can be disabled via an update. This will be explained in more detail below.

The certification authorities 14 and signers 13 preferably also comprise a product identifier. This is a unique identifier for one or more defined product types. The product identifier defines the domain where the same keys are used. More illustratively, the product identifiers divide the possible electronic devices 10 into classes, with one chain of a signer 13 and certificate authority 14 being responsible for one product identifier. Therefore, the certification structure of Figure 2 has one chain or branch per product identifier. For example, an electronic device 10 with product identifier "B" will consult the middle branch, i.e. certificates for that electronic device 10 are issued by the issuing certificate authority 14 of the middle branch, and data is signed by the signer 13 of the middle branch, each marked "B". Security issues with signature and certification authority keys affect only the branch of the respective product identifier. The electronic device 10 of the example is unscathed by a security issue in branches "A" or "C", and vice versa for electronic devices 10 having a different product identifier.

In the X.509 framework, certificate authorities and certificates are tied to a subject distinguished name. In that case, the iteration number and, if any, the product identifier are preferably added to that name. The same is true for signing certificates and digital signatures.

The electronic device 10 includes a truststore, which is a list of certificates and/or related data, that contains a minimal iteration number setting a condition for an iteration number of a signature and/or certificate, a product identifier, if that mechanism is established, and a root certificate of the root certificate authority 16, or one root certificate for each root certificate authority in a multi-algorithm setup as indicated by the small gray shaded trees.

Figure 3 shows an exemplary flow diagram for validating data as authentic in an electronic device 10. In a step S1, the digital signature of the data is verified. This includes verification of the digital signature itself and all certificates in the certification chain. If the verification fails, the data is rejected as not authentic in a step S10.

In a step S2, the name is extracted from the issuing certificate authority 14, or likewise the signer 13. As shown in Figure 2, the name includes the actual name and the iteration number and product identifier. Hence, in a step S3, it is possible to extract iteration number and product identifier.

In a step S4, it is checked whether the product identifier extracted in step S3 matches the product identifier of the electronic device's 10 truststore. If that is not the case, the data is rejected as not authentic in step S10. If the match is affirmed, it is also checked in a step S5 whether the iteration number extracted in step S3 matches or exceeds the minimal iteration number of the electronic device's 10 truststore. Again, if that is not the case, the data is rejected as not authentic in step S10. Otherwise, the data is accepted as authentic in a step S6.

In a somewhat simplistic summary, data is accepted as authentic if and only if it passes the conventional certificate checks, with additionally there being a match in product identifier and the iteration number being high enough.

This validation logic allows for very easy effective revocation of certificates in case that the signature key of the signer 13 or a certification key of a certificate authority 14 is compromised. The system owner, for example the manufacturer or vendor, creates a new certificate authority 14 replacing the affected certificate authority 14 of matching product identifier, having its iteration number increased by one. If there is a chain of certificate authorities 14, these are also freshly set up with increased iteration number. The new certificate authority 14 is signed by the root certificate authority 16, the signing and thus re-establishing of trust repeated from certificate authority to certificate authority down the chain, if there is a chain. The signature certificate of the signer 13 is also reissued with the new iteration number. The signing, in particular signing by the root certificate authority 16, preferably takes place in an offline system. All keys except for the signing keys preferably are stored in an offline system for security reasons. The root certificate authority 16 in particular can permanently be kept offline.

The electronic device 10 will immediately trust the new signing certificate as per the validation logic of Figure 3. The signing certificate is confirmed by the correct and trusted root certificate authority 16, has the correct product identifier in its name, and includes an incremented iteration number in its name that is higher than the minimal iteration stored in the electronic device's 10 truststore.

In order to also make sure that certificates of lower iteration number are no longer trusted, the system owner will provide an update following the setup of the new certificate authority 14 and creation of the new signing certificate. This update, when installed, at least stores a new minimal iteration number in the electronic device's 10 truststore. Afterwards, any data signed with the old and compromised key will no longer be accepted because the corresponding iteration number it too low. The update may for example be communicated by the system owner to all users, for example by a manufacturer or vendor to the customers, as described in a defined vulnerability disclosure process. A secure state of the electronic device 10 can be recovered after a breach with a very fast response time even if the electronic device 10 usually is offline.

## Claims

1. A method for modifying an electronic device (10) using authenticated data from a data host (12), the method comprising the steps of
- a signing service (13) digitally signing the data with a digital signature using a signature private key of a signature key pair and providing the signed data to the data host (12);
- the electronic device (10) retrieving the signed data from the data host (12);
- the electronic device (10) confirming a signature public key of the signature key pair using a certificate of a certificate authority (14);
- the electronic device (10) checking whether the certificate is valid; and
- the electronic device (10) confirming the digital signature and thus authenticity of the data using the signature public key,
**characterized in that** the certificate includes an iteration number and a product identifier, **in that** the electronic device (10) stores a minimal iteration number and a product identifier corresponding to a designated certificate authority (14) among a plurality of certificate authorities (14) that include a certificate authority (14) responsible for each possible product identifier, and **in that** the electronic device (10) checks whether the certificate's iteration number matches or exceeds the minimal iteration number, in order to be accepted as being valid, and whether the certificate's product identifier matches the stored product identifier.

2. The method according to claim 1,
wherein at least a second digital signature and at least a second certificate are used to confirm authenticity of the data, with the second certificate also checked for validity based on the iteration number or another iteration number.

3. The method according to claim 1 or 2,
wherein certificates of the certificate authority (14) are validated by a chain of higher-level certificate authorities with a root certificate authority (16) at the origin of the chain, wherein in particular the electronic device (10) stores a root certificate of the root certificate authority (16).

4. The method according to claim 3,
wherein the root certificate authority (16) authenticates a plurality of certificate authorities (14) that include a certificate authority (14) responsible for each possible product identifier.

5. The method according to any of the preceding claims,
wherein, in order to invalidate or revoke a certificate, a new certificate authority (14) is set up, replacing the certificate authority (14), and issuing certificates with iteration number increased.

6. The method according to claims 3 and 5,
wherein the new certificate authority (14) is authenticated by the root certificate authority (16).

7. The method according to claim 6,
wherein the authentication by the root certificate authority (16) takes place offline and/or wherein the root certificate authority (16) is always offline.

8. The method according to any of claims 5 to 7,
wherein, following revocation of a certificate and increase of the iteration number, the electronic device (10) is updated via authenticated data retrieved from the data host (12), the update including storage of a new minimal iteration number.

9. A data host (12) and certification network (14, 16) for providing authenticated data to an electronic device (10), the certification network (14, 16) comprising a certificate authority (14) configured to issue a certificate confirming authenticity of a signature public key of a signature key pair and a signing service (13) for digitally signing the data with a digital signature using a signature private key of the signature key pair and the data host (12) providing direct or indirect access for the electronic device (10) to retrieve the signed data,
**characterized in that** the certificate includes an iteration number and a product identifier, iteration number and product identifier usable in a check by the electronic device (10) whether the certificate is valid, the check including the steps whether the certificate's iteration number matches or exceeds an minimal iteration number stored in the electronic device (10) and whether the certificate's product identifier matches a product identifier stored in the electronic device (10), the product identifier corresponding to a designated certificate authority (14) among a plurality of certificate authorities (14) that include a certificate authority (14) responsible for each possible product identifier.

10. An electronic device (10), in particular a sensor, comprising an interface (22) for at least indirectly connecting the electronic device (10) to a data host (12), in particular to a data host (12) and a certification network (14, 16) according to claim 9, a memory (20) for storing data, and a control unit (18) configured to
- retrieve authenticated data via the interface and to store the data in the memory (20), the data digitally being signed by a signing service (13) with a digital signature using a signature private key of a signature key pair;
- verify a signature public key of the signature key pair using a certificate of a certificate authority (14);
- check whether the certificate is valid;
- confirm the digital signature and thus authenticity of the data using the signature public key; and
- if authenticity of the data is confirmed, modify the future control of the electronic device (10) based on the data,
**characterized in that** the certificate includes an iteration number and a product identifier, **in that** the electronic device (10) stores a minimal iteration number and a product identifier corresponding to a designated certificate authority (14) among a plurality of certificate authorities (14) that include a certificate authority (14) responsible for each possible product identifier, and **in that** the control unit (18) is further configured to check whether the certificate is valid bychecking whether the certificate's iteration number matches or exceeds the minimal iteration number, in order to be accepted as being valid, and whether the certificate's product identifier matches the stored product identifier.

11. A system comprising at least one data host (12) and certification network (14, 16) according to claim 9 and at least one electronic device (10) according to claim 10.

12. A computer-readable data carrier storing authenticated data, the data being digitally signed using a signature private key of a signature key pair, and a signature public key of the signature key pair being confirmed by a certificate issued by a certificate authority,
**characterized in that** the certificate includes an iteration number and a product identifier, iteration number and product identifier usable in a check by an electronic device (10) whether the certificate is valid, the check including the steps whether the certificate's iteration number matches or exceeds an minimal iteration number stored in the electronic device (10) and whether the certificate's product identifier matches a product identifier stored in the electronic device (10), the product identifier corresponding to a designated certificate authority (14) among a plurality of certificate authorities (14) that include a certificate authority (14) responsible for each possible product identifier.

## Patentansprüche

1. Verfahren zum Modifizieren einer elektronischen Vorrichtung (10) unter Verwendung authentifizierter Daten von einem Datenhost (12), wobei das Verfahren die folgenden Schritte umfasst:
- ein Signierdienst (13) signiert die Daten mit einer digitalen Signatur unter Verwendung eines privaten Signaturschlüssels eines Signaturschlüsselpaares digital und stellt die signierten Daten dem Datenhost (12) bereit;
- das elektronische Gerät (10) ruft die signierten Daten vom Datenhost (12) ab;
- das elektronische Gerät (10) bestätigt einen öffentlichen Signaturschlüssel des Signaturschlüsselpaares unter Verwendung eines Zertifikats einer Zertifizierungsstelle (14);
- die elektronische Vorrichtung (10) prüft, ob das Zertifikat gültig ist; und
- das elektronische Gerät (10) bestätigt die digitale Signatur und damit die Authentizität der Daten mit Hilfe des öffentlichen Signaturschlüssels,
**dadurch gekennzeichnet,**
**dass** das Zertifikat eine Iterationszahl und einen Produktidentifikator aufweist, dass die elektronische Vorrichtung (10) eine minimale Iterationszahl und einen Produktidentifikator speichert, der einer bestimmten Zertifizierungsstelle (14) unter einer Vielzahl von Zertifizierungsstellen (14) entspricht, die eine zuständige Zertifizierungsstelle (14) für einen jeweiligen Produktidentifikator aufweist, und dass die elektronische Vorrichtung (10) prüft, ob die Iterationszahl des Zertifikats mit der minimalen Iterationszahl übereinstimmt oder diese überschreitet, um als gültig akzeptiert zu werden, und ob der Produktidentifikator des Zertifikats mit dem gespeicherten Produktidentifikator übereinstimmt.

2. Verfahren nach Anspruch 1,
wobei mindestens eine zweite digitale Signatur und mindestens ein zweites Zertifikat verwendet werden, um die Authentizität der Daten zu bestätigen, wobei das zweite Zertifikat auch auf der Grundlage der Iterationszahl oder einer anderen Iterationszahl auf Gültigkeit geprüft wird.

3. Verfahren nach Anspruch 1 oder 2,
wobei Zertifikate der Zertifizierungsstelle (14) durch eine Kette von übergeordneten Zertifizierungsstellen mit einer Stammzertifizierungsstelle (16) am Anfang der Kette validiert werden, wobei insbesondere das elektronische Gerät (10) ein Stammzertifikat der Stammzertifizierungsstelle (16) speichert.

4. Verfahren nach Anspruch 3,
wobei die Stammzertifizierungsstelle (16) eine Vielzahl von Zertifizierungsstellen (14) authentifiziert, die für jeden möglichen Produktidentifikator eine verantwortliche Zertifizierungsstelle (14) aufweist.

5. Verfahren nach einem der vorhergehenden Ansprüche,
wobei zum Ungültigmachen oder Widerrufen eines Zertifikats eine neue Zertifizierungsstelle (14) eingerichtet wird, die die Zertifizierungsstelle (14) ersetzt und Zertifikate mit erhöhter Iterationszahl ausstellt.

6. nach den Ansprüchen 3 und 5,
wobei die neue Zertifizierungsstelle (14) von der Stammzertifizierungsstelle (16) authentifiziert wird.

7. Verfahren nach Anspruch 6,
wobei die Authentifizierung durch die Stammzertifizierungsstelle (16) offline erfolgt und/oder wobei die Stammzertifizierungsstelle (16) immer offline ist.

8. Verfahren nach einem der Ansprüche 5 bis 7,
wobei nach dem Widerruf eines Zertifikats und der Erhöhung der Iterationszahl die elektronische Vorrichtung (10) über authentifizierte Daten, die von dem Datenhost (12) abgerufen werden, aktualisiert wird, wobei die Aktualisierung die Speicherung einer neuen minimalen Iterationszahl einschließt.

9. Datenhost (12) und Zertifizierungsnetzwerk (14, 16) zum Bereitstellen authentifizierter Daten für eine elektronische Vorrichtung (10), wobei das Zertifizierungsnetzwerk (14, 16) eine Zertifizierungsstelle (14) aufweist, die dafür ausgebildet ist, ein Zertifikat auszugeben, das die Authentizität eines öffentlichen Signaturschlüssels eines Signaturschlüsselpaares bestätigt, und einen Signierdienst (13) zum digitalen Signieren der Daten mit einer digitalen Signatur unter Verwendung eines privaten Signaturschlüssels des Signaturschlüsselpaares aufweist, und wobei der Datenhost (12) für die elektronische Vorrichtung (10) einen direkten oder indirekten Zugriff zum Abrufen der signierten Daten bereitstellt,
**dadurch gekennzeichnet,**
**dass** das Zertifikat eine Iterationszahl und einen Produktidentifikator aufweist, wobei die Iterationszahl und der Produktidentifikator in einer Prüfung durch die elektronische Vorrichtung (10) verwendbar sind, ob das Zertifikat gültig ist, wobei die Prüfung die Schritte umfasst, ob die Iterationszahl des Zertifikats mit einer minimalen Iterationszahl, die in der elektronischen Vorrichtung (10) gespeichert ist, übereinstimmt oder diese überschreitet, und ob der Produktidentifikator des Zertifikats mit einem Produktidentifikator übereinstimmt, der in der elektronischen Vorrichtung (10) gespeichert ist, wobei der Produktidentifikator einer bestimmten Zertifizierungsstelle (14) unter einer Vielzahl von Zertifizierungsstellen (14) entspricht, die eine zuständige Zertifizierungsstelle (14) für einen jeweiligen Produktidentifikator aufweist.

10. Elektronisches Gerät (10), insbesondere Sensor, mit einer Schnittstelle (22) zum zumindest mittelbaren Verbinden des elektronischen Geräts (10) mit einem Datenhost (12), insbesondere mit einem Datenhost (12) und einem Zertifizierungsnetzwerk (14, 16) nach Anspruch 9, einem Speicher (20) zum Speichern von Daten und einer Steuereinheit (18), die dazu ausgebildet ist
- authentifizierte Daten über die Schnittstelle abzurufen und die Daten im Speicher (20) zu speichern, wobei die Daten von einem Signierdienst (13) mit einer digitalen Signatur unter Verwendung eines privaten Signaturschlüssels eines Signaturschlüsselpaares digital signiert werden;
- einen öffentlichen Signaturschlüssel des Signaturschlüsselpaares anhand eines Zertifikats einer Zertifizierungsstelle (14) zu überprüfen;
- zu prüfen, ob das Zertifikat gültig ist;
- die digitale Signatur und damit die Authentizität der Daten unter Verwendung des öffentlichen Signaturschlüssels zu bestätigen; und
- wenn die Echtheit der Daten bestätigt wird, die künftige Steuerung des elektronischen Geräts (10) auf der Grundlage der Daten zu ändern,
**dadurch gekennzeichnet,**
**dass** das Zertifikat eine Iterationszahl und einen Produktidentifikator enthält, dass die elektronische Vorrichtung (10) eine minimale Iterationszahl und einen Produktidentifikator speichert, die einer bestimmten Zertifizierungsstelle (14) unter einer Vielzahl von Zertifizierungsstellen (14) entsprechen, die eine zuständige Zertifizierungsstelle (14) für einen jeweiligen Produktidentifikator aufweist, und dass die Steuereinheit (18) ferner so konfiguriert ist, dass sie prüft, ob das Zertifikat gültig ist, indem sie prüft, ob die Iterationszahl des Zertifikats mit einer minimalen Iterationszahl übereinstimmt oder diese überschreitet, um als gültig akzeptiert zu werden, und ob der Produktidentifikator des Zertifikats mit dem gespeicherten Produktidentifikator übereinstimmt.

11. System mit mindestens einem Datenhost (12) und einem Zertifizierungsnetzwerk (14, 16) nach Anspruch 9 und mindestens einem elektronischen Gerät (10) nach Anspruch 10.

12. Computerlesbarer Datenträger, der authentifizierte Daten speichert, wobei die Daten unter Verwendung eines privaten Signaturschlüssels eines Signaturschlüsselpaares digital signiert werden und ein öffentlicher Signaturschlüssel des Signaturschlüsselpaares durch ein von einer Zertifizierungsstelle ausgestelltes Zertifikat bestätigt wird,
**dadurch gekennzeichnet,**
**dass** das Zertifikat eine Iterationszahl und einen Produktidentifikator enthält, wobei die Iterationszahl und der Produktidentifikator in einer Prüfung durch eine elektronische Vorrichtung (10) verwendbar sind, ob das Zertifikat gültig ist, wobei die Prüfung die Schritte umfasst, ob die Iterationszahl des Zertifikats mit einer minimalen Iterationszahl, die in der elektronischen Vorrichtung (10) gespeichert ist, übereinstimmt oder diese überschreitet, und ob der Produktidentifikator des Zertifikats mit einem Produktidentifikator übereinstimmt, der in der elektronischen Vorrichtung (10) gespeichert ist, wobei der Produktidentifikator einer bestimmten Zertifizierungsstelle (14) aus einer Vielzahl von Zertifizierungsstellen (14) entspricht, die eine zuständige Zertifizierungsstelle (14) für einen jeweiligen Produktidentifikator aufweist.

## Revendications

1. Procédé de modification d'un dispositif électronique (10) à l'aide de données authentifiées provenant d'un hôte de données (12), le procédé comprenant les étapes dans lesquelles
- un service de signature (13) signe numériquement les données avec une signature numérique en utilisant une clé privée de signature d'une paire de clés de signature, et fournit les données signées à l'hôte de données (12) ;
- le dispositif électronique (10) récupère les données signées provenant de l'hôte des données (12) ;
- le dispositif électronique (10) confirme une clé publique de signature de la paire de clés de signature en utilisant un certificat d'une autorité de certification (14) ;
- le dispositif électronique (10) vérifie si le certificat est valide ; et
- le dispositif électronique (10) confirme la signature numérique et donc l'authenticité des données en utilisant la clé publique de signature,
**caractérisé en ce que** le certificat comprend un numéro d'itération et un identifiant de produit, **en ce que** le dispositif électronique (10) stocke un numéro d'itération minimal et un identifiant de produit correspondant à une autorité de certification déterminée (14) parmi une pluralité d'autorités de certification (14) qui incluent une autorité de certification (14) responsable de chaque identifiant de produit possible, et **en ce que** le dispositif électronique (10) vérifie si le numéro d'itération du certificat correspond ou dépasse le numéro d'itération minimal, afin d'être accepté comme valide, et si l'identifiant de produit du certificat correspond à l'identifiant de produit stocké.

2. Procédé selon la revendication 1,
dans lequel au moins une deuxième signature numérique et au moins un deuxième certificat sont utilisés pour confirmer l'authenticité des données, la validité du deuxième certificat étant également vérifiée sur la base du numéro d'itération ou d'un autre numéro d'itération.

3. Procédé selon la revendication 1 ou 2,
dans lequel les certificats de l'autorité de certification (14) sont validés par une chaîne d'autorités de certification de niveau supérieur ayant une autorité de certification racine (16) à l'origine de la chaîne,
en particulier, le dispositif électronique (10) stocke un certificat racine de l'autorité de certification racine (16).

4. Procédé selon la revendication 3,
dans lequel l'autorité de certification racine (16) authentifie une pluralité d'autorités de certification (14) qui incluent une autorité de certification (14) responsable de chaque identifiant de produit possible.

5. Procédé selon l'une des revendications précédentes,
dans lequel, afin d'invalider ou de révoquer un certificat, une nouvelle autorité de certification (14) est mise en place, qui remplace l'autorité de certification (14) et émet des certificats avec un numéro d'itération augmenté.

6. Procédé selon les revendications 3 et 5,
dans lequel la nouvelle autorité de certification (14) est authentifiée par l'autorité de certification racine (16).

7. Procédé selon la revendication 6,
dans lequel l'authentification par l'autorité de certification racine (16) a lieu hors ligne et/ou l'autorité de certification racine (16) est toujours hors ligne.

8. Procédé selon l'une des revendications 5 à 7,
dans lequel, à la suite de la révocation d'un certificat et de l'augmentation du numéro d'itérations, le dispositif électronique (10) est mis à jour au moyen de données authentifiées récupérées auprès de l'hôte de données (12), la mise à jour comprenant le stockage d'un nouveau numéro d'itérations minimal.

9. Hôte de données (12) et réseau de certification (14, 16) pour fournir des données authentifiées à un dispositif électronique (10), le réseau de certification (14, 16) comprenant une autorité de certification (14) configurée pour émettre un certificat confirmant l'authenticité d'une clé publique de signature d'une paire de clés de signature, et un service de signature (13) pour signer numériquement les données avec une signature numérique en utilisant une clé privée de signature de la paire de clés de signature, l'hôte de données (12) fournissant un accès direct ou indirect au dispositif électronique (10) pour récupérer les données signées,
**caractérisé en ce que** le certificat comprend un numéro d'itération et un identifiant de produit, le numéro d'itération et l'identifiant de produit pouvant être utilisés pour vérifier, par l'intermédiaire du dispositif électronique (10), si le certificat est valide, **en ce que** la vérification comprend les étapes consistant à vérifier si le numéro d'itération du certificat correspond ou dépasse un numéro d'itération minimal stocké dans le dispositif électronique (10) et si l'identifiant de produit du certificat correspond à un identifiant de produit stocké dans le dispositif électronique (10), l'identifiant de produit correspondant à une autorité de certification déterminée (14) parmi une pluralité d'autorités de certification (14) qui incluent une autorité de certification (14) responsable de chaque identifiant de produit possible.

10. Dispositif électronique (10), en particulier un capteur, comprenant une interface (22) pour connecter au moins indirectement le dispositif électronique (10) à un hôte de données (12), en particulier à un hôte de données (12) et à un réseau de certification (14, 16) selon la revendication 9, une mémoire (20) pour stocker des données, et une unité de commande (18) configurée pour
- récupérer des données authentifiées via l'interface, et stocker les données dans la mémoire (20), les données étant signées numériquement par un service de signature (13) avec une signature numérique en utilisant une clé privée de signature d'une paire de clés de signature ;
- vérifier une clé publique de signature de la paire de clés de signature en utilisant un certificat d'une autorité de certification (14) ;
- vérifier si le certificat est valide ;
- confirmer la signature numérique et donc l'authenticité des données en utilisant la clé publique de signature ; et
- si l'authenticité des données est confirmée, modifier la commande future du dispositif électronique (10) sur la base des données,
**caractérisé en ce que** le certificat comprend un numéro d'itération et un identifiant de produit, **en ce que** le dispositif électronique (10) stocke un numéro d'itération minimal et un identifiant de produit correspondant à une autorité de certification déterminée (14) parmi une pluralité d'autorités de certification (14) qui incluent une autorité de certification (14) responsable de chaque identifiant de produit possible, et **en ce que** l'unité de commande (18) est en outre configurée pour vérifier si le certificat est valide en vérifiant si le numéro d'itération du certificat correspond ou dépasse le numéro d'itération minimal, afin d'être accepté comme valide, et si l'identifiant de produit du certificat correspond à l'identifiant de produit stocké.

11. Système comprenant au moins un hôte de données (12) et un réseau de certification (14, 16) selon la revendication 9 et au moins un dispositif électronique (10) selon la revendication 10.

12. Support de données lisible par ordinateur, stockant des données authentifiées, les données étant signées numériquement en utilisant une clé privée de signature d'une paire de clés de signature, et une clé publique de signature de la paire de clés de signature étant confirmée par un certificat émis par une autorité de certification,
**caractérisé en ce que** le certificat comprend un numéro d'itération et un identifiant de produit, le numéro d'itération et l'identifiant de produit pouvant être utilisés pour vérifier, par l'intermédiaire d'un dispositif électronique (10), si le certificat est valide, **en ce que** la vérification comprend les étapes consistant à vérifier si le numéro d'itération du certificat correspond ou dépasse un numéro d'itération minimal stocké dans le dispositif électronique (10) et si l'identifiant de produit du certificat correspond à un identifiant de produit stocké dans le dispositif électronique (10), l'identifiant de produit correspondant à une autorité de certification déterminée (14) parmi une pluralité d'autorités de certification (14) qui incluent une autorité de certification (14) responsable de chaque identifiant de produit possible.
